# EUROPEAN PATENT SPECIFICATION

(11) **EP 2 312 433 B1**
(45) Date of publication and mention of the grant of the patent: **07.12.2016**
(21) Application number: 09173456.6
(22) Date of filing: 19.10.2009
(51) Int. Cl.: G06F 5/06, G06F 5/12

(54) **Bi-directional low-latency buffer**
Bidirektionaler Puffer mit niedriger Latenz
Tampon bidirectionnel à latence faible

(43) Date of publication of application: 20.04.2011
(73) Proprietor: BlackBerry Limited, Waterloo, ON N2K 0A7 (CA)
(72) Inventor: Bulgin, Scott, Waterloo Ontario N2L 5R9 (CA); Martin, Cyril, 44799 Bochum (DE); Gustavsson, Bengt Stefan, Waterloo Ontario N2L 3W8 (CA)
(74) Representative: Gill Jennings & Every LLP

(56) References cited:
- EP-A2- 0 615 241
- WO-A1-2007/009212
- GB-A- 2 352 371
- US-A- 5 418 913
- FIEDLER J ET AL: "Converged Media and Communication Services" IT REVOLUTIONS, 2008 FIRST CONFERENCE ON, IEEE, PISCATAWAY, NJ, USA, 17 December 2008 (2008-12-17), pages 1-7, XP031475731 ISBN: 978-963-9799-38-7

## Description

### TECHNICAL FIELD

The technology described herein relates to buffers, and in particular to audio buffers for audio playback devices and methods of operating audio buffers of audio playback devices

### BACKGROUND

Audio playback devices, including portable MPEG Layer 3 (MP3) players, smart phones and other portable devices capable of audio playback, are commonly used as entertainment devices for listening to music or other audio or audio/visual data. Audio output device, such as speakers or headphones, are connected to the audio playback device and receive an analog audio signal from the audio playback device. The audio playback device generally includes controls for controlling the playback of the audio, which may include play/pause/stop, skip forward, skip backward, volume up and volume down. It will be apparent that other controls may also be included, or various controls of those listed omitted from particular audio playback devices.

With the increasing miniaturization of audio playback devices, there has become less room for the location of controls on the device itself. One option for locating the controls of the audio playback device is to include them on a remote that is separate from the audio playback device. This can include attaching a remote control unit having playback controls to the headphones or other audio output device connected to the audio playback device. The remote may communicate with the audio playback device over specialized pins or connections; however, this requires an additional physical connector, which may be undesirable or difficult to locate within an audio playback device. Wireless communication between the remote and the audio playback device is also possible; however, this results in greater power consumption for the audio playback device and requires a battery for the remote.

WO 2007/009212 A1 of Allen, Andrew et al. describes an apparatus and method for providing Push-To-Talk (PTT) data buffering support indications from mobile devices and PTT data buffering control by wireless networks. According to WO 2007/009212 a mobile communication device has one or more processors and a wireless transceiver adapted to provide communications through a wireless communication network. The one or more processors are operative to produce a mobile device indication message which indicates whether the mobile device supports buffering of PTT communications from the mobile device. This message is transmitted by the wireless transceiver to a PTT service entity through the wireless network. The one or more processors may be further operative to receive, from the PTT service entity through the wireless network, a network indication message which instructs the mobile device whether to use buffering for the PTT communications from the mobile device (assuming a buffer memory for PTT buffering is available in the mobile device). The mobile device may use the buffer memory for the buffering of the PTT communication based on the network indication message from the PTT service entity.

### SUMMARY

One aspect of the present disclosure is a bi-directional buffer according to appended claim 1 comprising a memory buffer for storing blocks of data; a first data path connection for reading and replacing segments of several blocks of data in the memory buffer received intermittently from a first interface; a second data path connection for continuously reading blocks of data from the memory buffer to a second interface and continuously replacing the read blocks of data from the second interface; and a control unit using a first pointer indicating a fill position in the memory buffer and a second pointer indicating a read position in the memory buffer. The control unit has a first mode of operation in which the control unit is adapted to intermittently signal to the first interface over a control path connection to replace a segment of several blocks of data of a first predetermined size over the first data path connection in the memory buffer at a position ahead of the first pointer; and a second mode of operation in which the control unit is adapted to intermittently signal to the first interface over the control path connection to read and replace a segment of several blocks of data of a second predetermined size less than the first predetermined size over the first data path connection at the position in the memory buffer ahead of the first pointer, where said signalling in the second mode of operation is performed more frequently than in the first mode of operation; wherein a block of data stored in the memory buffer at a position indicated by the second pointer is continuously read and replaced by the second interface over the second data path connection in both modes of operation.

A further aspect of the present disclosure is an audio playback device according to appended claim 6 comprising an input/output connector for coupling the audio playback device to an audio output device and a playback control device. The audio playback device further comprises an application processor for intermittently replacing a segment of several blocks of data of a first predetermined size; intermittently replacing a segment of several blocks of data of a second predetermined size, less than the first predetermined size; and intermittently reading a segment of several blocks of data of the second predetermined size. The audio playback device further comprises an analog-to-digital/digital-to-analog converter (ADDAC) for continuously reading a block of data for playback; and continuously replacing a block of data from the playback control device. The audio playback device further comprises an audio buffer for storing blocks of data. The audio buffer comprises an application processor data path and control path coupled to the application processor; an ADDAC data path coupled to the ADDAC; a memory buffer for storing the blocks data; and a control unit using a first pointer indicating a fill position in the memory buffer and a second pointer indicating a read position in the memory buffer. The control unit has a first mode of operation in which the control unit is adapted to intermittently signal to the application processor over the application processor control path to replace a segment of several blocks of output data of a first predetermined size over the application processor data path in the memory buffer at a position ahead of the first pointer; and a second mode of operation in which the control unit is adapted to intermittently signal to the application processor over the application processor control path connection to read and replace a segment of several blocks of data of a second predetermined size less than the first predetermined size over the application processor data path connection at the position in the memory buffer ahead of the first pointer, where said signalling in the second mode of operation is performed more frequently than in the first mode of operation, wherein a block of data stored in the memory buffer at a position indicated by the second pointer is continuously read and replaced over the ADDAC data path in both modes of operation.

A still further aspect of the present disclosure is a method of operating a bidirectional buffer according to appended claim 13 for storing output data received from a first interface capable of providing segments of several blocks of data intermittently and input data received from a second interface capable of continuously providing blocks of data. The method comprises operating the buffer in a first mode comprising: determining a state of the buffer (buffer state); determining from the buffer state if more output data is to be added to the buffer from the first interface coupled to the buffer based upon a first set of criteria; replacing input data stored in the buffer with output data of a first predetermined size received from the first interface, starting at a first position indicated by a first pointer based upon the determined buffer state; reading output data from the buffer at a second position indicated by a second pointer; and replacing the read output data with input data received from the second interface; and switching the buffer to operate in a second mode comprising: determining the buffer state; determining from the buffer state if more output data is to be added to the buffer from the first interface based upon a second set of criteria; reading an amount of input data of a second predetermined size from the buffer starting at the first position indicated by the first pointer; replacing the read input data stored in the buffer with an amount of output data of the second predetermined size received from the first interface, starting at the first position indicated by the first pointer based upon the determined buffer state; reading output data from the buffer at the second position indicated by the second pointer; and replacing the read output data with input data received from the second interface.

### BRIEF DESCRIPTION OF THE DRAWINGS

Various implementations of the novel technology are described below by way of example with reference to the appended drawings in which:
Figure 1 depicts in a block diagram, an illustrative audio playback device, including an audio buffer;
Figure 2 depicts in a block diagram, communication paths of an illustrative audio playback device;
Figure 3 depicts in a block diagram, an illustrative audio buffer;
Figure 4 depicts in a flowchart, an illustrative method of operating an audio buffer;
Figure 5 depicts in a memory diagram, an illustrative memory buffer during the operation of an illustrative audio buffer in a first mode of operation; and
Figure 6 depicts in a memory diagram, an illustrative memory buffer during the operation of an illustrative audio buffer in a second mode of operation.

### DETAILED DESCRIPTION

To overcome the requirement of an additional connector for a remote control, some remote controls are capable of sending playback control information over a line-in (mic line or record line) connection that is present on the audio output connection. While this technique addresses the need for an additional remote control connection, it requires that the control information be sent over the mic line as an analog signal, such as a tone or combination of tones, which is the converted to a digital input control data and sent to the application processor of the audio playback device, possibly through a buffer. The application processor may then process the input control data to determine the control information sent by the remote, such as a stop command. Due to cost and size considerations it is desirable to limit the number of buffers required in the audio playback device, and as such the same buffer used for buffering the audio output data may be used for buffering the control input data. The use of the same buffer for buffering data in both the input and output directions can lead to higher latency in receiving the control input data, which is undesirable.

The present technology, in general, enables an audio playback device to provide an efficient and low latency audio buffer capable of buffering both output audio data and input control data. The audio buffer has at least two modes of operation, the first is a high latency mode in which large segments of audio output data can be received and buffered from a discontinuous interface, capable of providing segments of data intermittently, attached to the audio buffer. The high latency mode allows the discontinuous interface to intermittently provide segments of output audio data to the audio buffer and enter a low powered sleep mode in between providing segments. The segments of data buffered from the discontinuous interface are read by a continuous interface and replaced with input control data from the continuous interface. The high latency mode provides power efficiency; however, it also results in a high latency between times at which the discontinuous interface can receive input control data from the audio buffer. High latency may result in, for example a delayed response to user input. The second mode of operation of the audio buffer is a low latency mode, which allows the discontinuous interface to provide smaller segments of output audio data more often, and so provides a lower latency and be more responsive to user input, at the cost of requiring the discontinuous interface to provide data more frequently, which may consume more power.

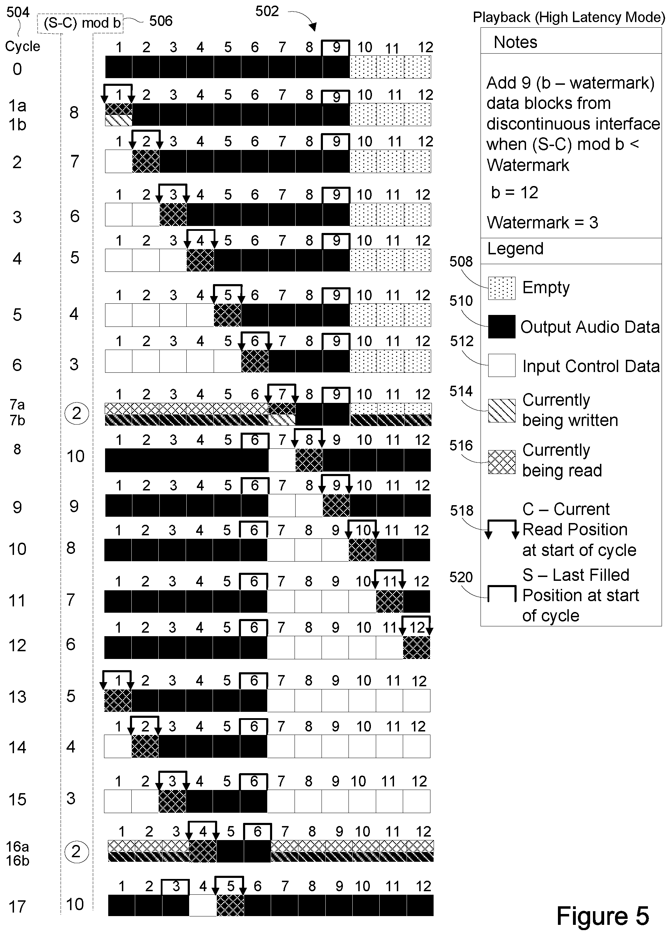

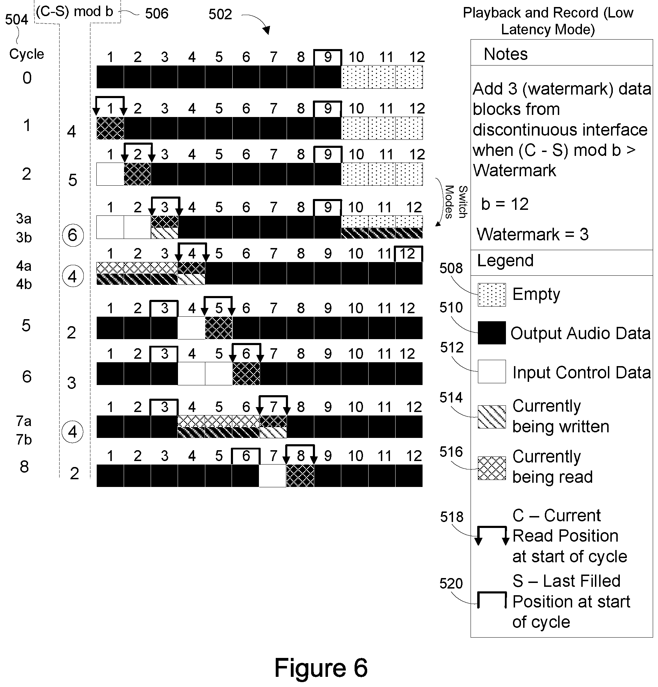

The audio buffer described herein is presented as being implemented using a First-In First-Out (FIFO) buffer that uses a read and replace strategy for writing data to the FIFO Buffer. In a read and replace buffer, the memory block, or blocks, being written to are first read out so that any data stored in the memory block(s) may be received prior to being replaced. The read and replace strategy allows the FIFO buffer to act as a bidirectional buffer. As described further, and in particular with reference to Figures 5 and 6, input control data received from the continuous interface is first read out of the audio buffer prior to being replaced with output audio data from the discontinuous interface. Similarly, the output audio data from the discontinuous interface is first read out of the audio buffer prior to being replaced with input control data from the continuous interface. The 'output' and 'input' description of the data is relative to the discontinuous interface and continuous interface coupled to the audio buffer and not the audio buffer itself, since both the output audio data and input control data may be considered to be both input and output to and from the audio buffer. Output data originates at the discontinuous interface and passes through the audio buffer to the continuous interface, while input data originates at the continuous interface and passes through the buffer to the discontinuous interface.

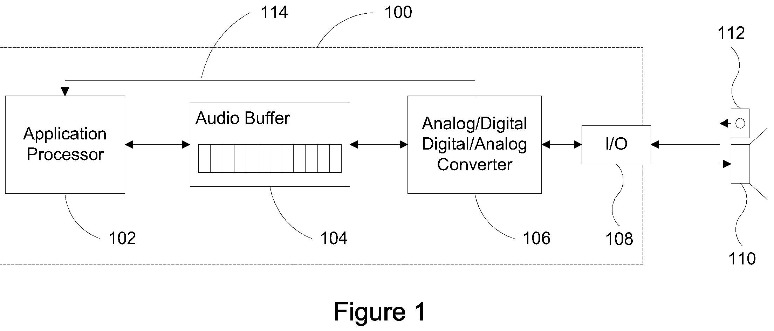

Figure 1 depicts in a block diagram, an illustrative audio playback device 100 including an audio buffer **104.** The audio playback device **100** may be, for example, an MP3 player, a smart phone or other portable devices capable of audio playback. The audio playback device **100** comprises an application processor **102,** an audio buffer **104** an analog-to-digital/digital-to-analog converter (ADDAC) **106** (or codec) and an input/output (I/O) connection **108.** An audio output device **110** and playback control device **112** are also shown as being connected to the I/O connection **108.**

The application processor **102** may be a processor suitable for executing instructions stored in memory (not shown) of the audio playback device **100.** The instructions when executed by the application processor **102,** configure the audio playback device **100** in order to provide audio, or output, data to the audio buffer. The output data is digital data that is subsequently converted to an analog signal for playback over the audio output device **110** by the ADDAC **106.** The application processor **102** acts as a discontinuous interface to the audio buffer **104.** The application processor **102** can intermittently provide segments of output audio data to the audio buffer **104.** The application processor **102** is configured to be able to provide different size segments of audio output data to the audio buffer **104** depending on the mode of operation that the audio buffer **104** is operating in. In a first mode, the application processor **102** provides a large segment of output audio data to the audio buffer **104** at a low rate, that is the large segments of output audio data are provided less frequently. In a second mode, the application processor **102** provides a small segment of output audio data to the audio buffer **104** at a high rate, that is the small segments of output audio data are provided more frequently. The relative terms large segment and small segment are described in further detail herein with regards to an audio buffer **104** of an illustrative size.

The audio buffer **104** provides a FIFO memory buffer for temporarily storing output data received from the application processor **102.** The audio buffer **104** also provides the FIFO memory buffer for temporarily storing input control data received from the ADDAC **106.** The audio buffer **104** provides a bidirectional memory buffer for buffering both output audio data that is received in segments transmitted discontinuously from the application processor **102** and input control data that is received in blocks continuously from the ADDAC **106.** As described herein a segment of data comprises a plurality of blocks of data.

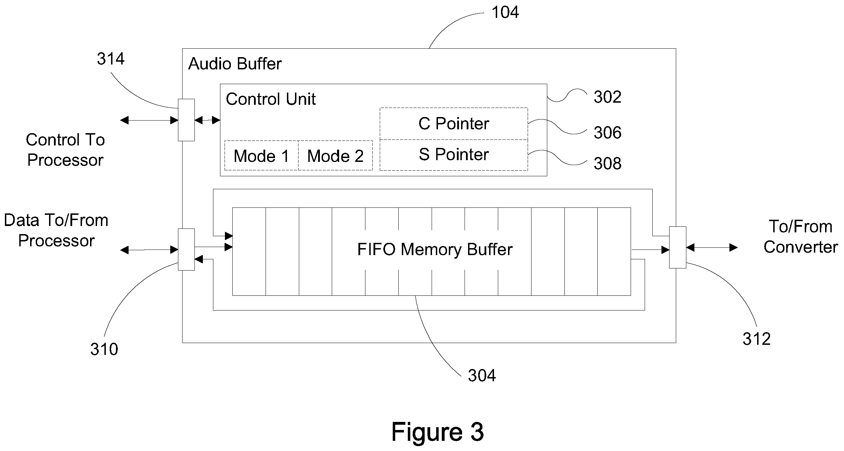

The audio buffer **104** provides a control signal to the application processor **102** indicating that more output audio data can be provided. Thus, the audio buffer **104** determines the rate at which the application processor **102** reads and replaces data to the audio buffer **102.** As described further herein, and in particular with reference to Figure 3, the audio buffer **104** provides two modes of operation that determine when to indicate, using the control signal, to the application processor **102** that it can provide more output audio data. Upon receiving an indication from the audio buffer **104** that more output audio data can be provided, the application processor **102** may transition from a low power sleep mode to a high power awake mode in order to provide the output audio data. After providing the output audio data, the application processor **102** may return to the low power sleep mode. The more frequently the audio buffer **104** sends the control signal to the application processor **102** to provide output audio data, the more often the application processor **102** is in the high power awake mode, and the more power will be consumed by the audio playback device **100.**

The output audio data that is buffered by the audio buffer **104** is read out continuously, in blocks, by the ADDAC **106,** and replaced continuously with input control data from the ADDAC **106.** The input control data is intermittently read out from the audio buffer **104,** in segments, by the application processor **102** as it is providing more output audio data. The input control data received by the application processor **102** may include playback control information that was transmitted as an audio tone, for example as a particular frequency, or combination of frequencies, by the playback control device **112** over the mic line of the I/O connection **108.** The application processor **102** may receive the input control data and process it in order to determine the playback control to initiate, for example pause playback of the audio. The application processor **102** receives, and processes, the input control data in segments when it provides the output audio data to the audio buffer **104.** As a result, the more frequently the application processor **102** provides output audio data to the audio buffer **104,** the more frequently it will receive input control data. The more frequently the audio processor **102** receives the input control data, the lower the latency will be between a user activating a playback control on the playback control device **112** and the application processor **102** initiating the playback control, for example pausing playback of audio. Although it is desirable to have a low latency for processing the input control data, it requires that the application processor **102** be in an awake state more often, which consumes more power as described above.

The ADDAC **106** is capable of receiving a block of digital output audio data from the audio buffer **104** continuously and converting the digital output audio data into an analog signal that is suitable for playback by the audio playback device **110.** The ADDAC **106** is also capable of receiving an analog signal from the mic line connected to, for example, the playback control device **112.** The analog signal may include playback control information transmitted by the playback control device **112,** and the ADDAC **106** is capable of converting the analog signal into digital input control data that is provided continuously in blocks to the audio buffer **104.** The analog-to-digital and digital-to-analog converter portions of the ADDAC **106** may operate simultaneously, so that a block of output audio data may be read out of the audio buffer **104** and replaced with a block of input control data from the ADDAC **106.**

The I/O connector **108** provides a physical interface between the audio playback device **100** and the audio output device **110** as well as the playback control device **112.** The I/O connector **108** may be provided by various physical connectors including for example, a 3.5 mm jack, or a mini jack. The I/O connector **108** may provide the physical connection for both the output connection and input connection, also referred to herein as the mic line. For example, a 3.5 mm jack may include 4 connection rings, two for different channels of output data, one for the input data and a fourth for a signal ground. It will be appreciated that different physical connections may be easily substituted in place of the described 3.5 mm jack. Additionally the input connection and output connections may be physically separate; however, this may take up additional space in the audio playback device **100,** which can present undesirable constraints on the physical size or layout of the audio playback device **100.**

The playback control device 112 provides playback control information to the application processor **102** in order to control the operation of the audio playback device **100.** The playback control device **112** may be a part of a multi-button headset that provides different controls to a user of the audio playback device **100** as well as an audio output device **110,** such as headphones. The playback control device **112** transmits the playback control information over the mic line of the I/O connection **108,** as an analog signal. The playback control information may be represented by a tone, or combination of tones. The application processor **102** detects the tone(s), as well as other information present in the input control data, such as the length of the tone(s) and the time between them, in order to determine the controls that have been activated by the user and initiate the appropriate control of the audio playback device **100.** The control information transmitted from the playback control device **112** is converted by the ADDAC **106** into digital input control data and temporarily stored by the audio buffer **104** prior to being read and processed by the application processor **102.**

The audio playback device **100** may include an ADDAC control signal line **114,** which is coupled to the application processor **102.** The ADDAC control signal line **114** can be used by the ADDAC **106** to signal to the application processor **102** that control information, for example the tone(s) of playback control information, has been detected on the input line of the ADDAC **106.** Although it is possible for the ADDAC **106** to detect the presence of control information on the input line, the ADDAC **106** does not have the processing power necessary to process the control information. As a result the ADDAC **106** signals to the application processor **102,** using the ADDAC control signal line **114,** that control information has been detected. Upon receiving the signal from the ADDAC control signal line **114,** the application processor **102** switches modes, which determines the size of the segments read and written to the audio buffer **104** in each buffer cycle. The application processor **102** also signals to the audio buffer **104** to change modes in order to provide a low latency path for the detected control information. The audio buffer **104** changes modes, which causes the audio buffer **104** to signal to the application processor **102** that it can provide more output data more frequently. The application processor **102,** which has also switched modes, provides the smaller segments of output audio data to the audio buffer **104** when signalled. As a result, the application processor **102** will receive the signal from the audio buffer **104** more frequently and will read the input control data from the audio buffer **104** more frequently prior to providing segments of output audio data, which will be of a smaller size.

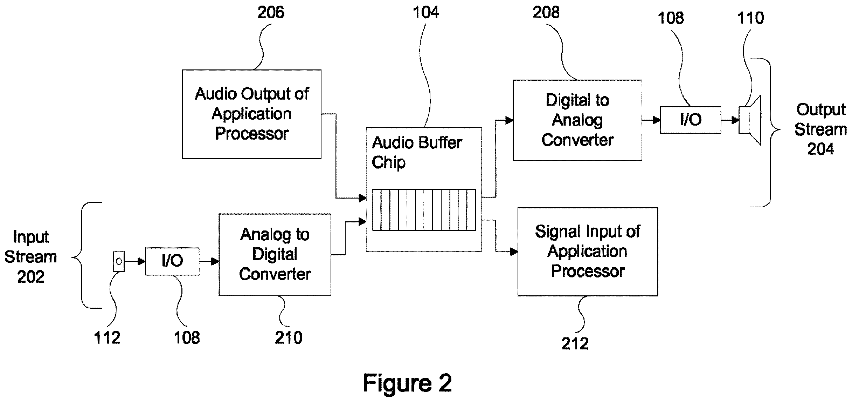

Figure 2 depicts in a block diagram, communication paths of an illustrative audio playback device, such as audio playback device **100.** The components of audio playback device **100** have been logically separated to highlight the input stream **202** and output stream **204.** The input stream **202,** which comprises a stream of input control data, begins at the playback control device **112.** The playback control device **112** generates control information, for example as a tone or combination of tones, that is transmitted over the mic line of the I/O connection **108** as an analog signal. The analog input signal is received at the Analog-to-Digital converter (ADC) component **310** of the ADDAC **106,** which converts the analog input signal into a stream of digital input control data which is temporarily stored in the audio buffer **104.** The input control data is then read out of the audio buffer **104** by, or provided to, the signal input **212** of the application processor **102.**

The output stream **204,** which comprises a stream of output audio data, begins at the audio output **206** of the application processor **102.** The audio output **206** intermittently provides output audio data to the audio buffer **104.** The output audio data is then read out of the audio buffer **104** by, or provided to, the digital-to-analog converter (DAC) component **208** of the ADDAC **106.** The digital-to-analog converter component **208** then converts the digital output audio data into an analog output signal which is provided to the audio output device **110,** via the output connection of the I/O connector **108.**

It will be appreciated that both the input stream **202** and the output stream **204** are synchronized at the audio buffer **104** as a result of the read and replace nature of the audio buffer **104.** That is, output of the output audio data to the DAC **208** is synchronized with the input of the input control data from the ADC **210,** so that a block of output audio data is first read by, or provided to the DAC **208,** and then is replaced with a block of input control data from the ADC **210.** Similarly, the input stream and output streams are synchronized at the application processor **102,** in that a segment of input control data is read by, or provided to, the signal input **212** and replaced with a segment of output audio data. As described further herein, the size of the segment of input control data and output audio data that is read and replaced is predetermined, but varies depending on the mode of operation of the audio buffer **104.**

Figure 3 depicts in a block diagram, an illustrative embodiment of audio buffer **104.** Although the audio buffer **104** is described as being connected to the application processor **102** and the ADDAC **106** of audio device **100,** it will be appreciated that the audio buffer **104** may be used to provide a bidirectional buffer between any discontinuous interface, capable of reading and replacing data of different predetermined sizes intermittently, and a continuous interface capable of reading and replacing data of a predetermined size continuously. The discontinuous interface typically is capable of providing data to the audio buffer **104** at a higher rate than the continuous interface, which allows the discontinuous interface to read and replace segments of data in a single buffer cycle, as described further with reference to Figures 5 and 6.

The audio buffer **104** comprises a control unit **302** that determines when to signal to the discontinuous interface to provide additional output audio data to the audio buffer **104.** For the clarity of the description, the discontinuous interface is considered to be provided by the application processor **102.** The continuous interface continuously reads the output audio data temporarily stored in the audio buffer **104** and replaces it with input control data. For the clarity of the description, the continuous interface is considered to be provided by the ADDAC **106.** The control unit **302** has two modes of operation that determine when to signal to the application processor **102** to provide additional output audio data. The audio buffer **104** further includes a FIFO memory buffer **304** for temporarily storing both input control data and output audio data. The FIFO memory buffer **304** is depicted as providing storage for twelve blocks of data. It will be appreciated that this is done merely for simplicity and clarity of the description. A memory buffer may provide, for example 32 kilobytes of data. However, it will also be appreciated that this size is not an actual limitation, but is a balance between physical size of the memory, cost of the memory and power requirements of the memory and may be made larger or smaller as design requirements and limitations dictate.

The control unit **302** uses two pointers **306, 308** that point to a memory location in the FIFO memory buffer **304.** One pointer is referred to as the C pointer **306,** which indicates the current memory location of the FIFO buffer memory **304** that is being read and replaced. The other pointer is referred to as the S pointer **308** and indicates the last filled position, or the end or stop position, in the FIFO buffer memory **304.** The control unit **302** uses both the C pointer **306** and S pointer **308** in order to determine when to signal to the application processor **102** to provide additional output audio data. The control unit **302** may also utilize the size (b) of the FIFO memory buffer **304** as well as a watermark (W) of the audio buffer when determining when to signal for additional output audio data. W may also be used by the application processor **102** in order to determine the predetermined size of the segment of output audio data that is provided to the audio buffer **104** in each mode of operation. If the application processor **102** is responsible for determining the predetermined size of the segment of output audio data to provide to the audio buffer **104** in each mode, then the application processor **102** and audio buffer **104** must utilize the same value for W. If the application processor **102** and buffer **104** do not use the same value of W, the audio buffer may signal to provide more output audio data, and the application processor **102** may provide more output audio data than can be stored in the FIFO buffer memory **304.** Rather than having the application processor **102** determine the size of the segment of output audio data to provide when signalled by the audio buffer **104,** the audio buffer **104** may signal to the application processor **102,** in addition to the signal indicating to provide additional output data, the segment size of the additional output audio data to be provided.

The audio buffer **104** is coupled to the application processor **102** via an application processor data path **310** as well as a control path **314.** The application processor data path **310** is used to receive and provide data from the application processor **102.** The control path **314** provides for control communication between the application processor **102** and the audio buffer **104.** The control communication may include communication from the application processor **102** signalling to the audio buffer **104** to switch modes and communication to the application processor **102** signalling it can provide additional output audio data to the audio buffer **104.** The control communication may also communicate additional information, such as the size of the output audio data to be provided, the values of the C pointer **306** and S pointer **308,** the value of W and the size of the FIFO buffer memory **304.** The audio buffer **104** is also coupled to the ADDAC **106** via an ADDAC data path **312.** The audio buffer **104** may also communicate control information to the ADDAC **106,** for example over an ADDAC control path; however this is not shown for simplicity. Furthermore, it will be appreciated that while the control path **314** and application processor data path **310,** as well as the ADDAC data path **312** and ADDAC control path (not shown), are described as physically separate paths, the data and control paths may be combined together on a control and data path.

As described above, the control unit **302** determines when to signal to the application processor **102** that it may provide additional output audio data. The control unit **302** may determine this based on the mode of operation it is operating in and at least the values of the C pointer **306** and the S pointer. In the first mode of operation the control unit **302** determines when to signal for additional output audio data by determining the buffer state based on at least the values of the pointers **306, 308** and evaluating the determined buffer state against at least a first criteria. When operating in the second mode, control unit **302** determines when to signal for additional output audio data by determining the buffer state based on at least the values of the pointers **306,** 308 and evaluating the determined buffer state against at least a second criteria. As described further below, not only is the criteria used to evaluate the buffer state against different in the first and second modes of operation, the determination of the buffer state may also differ in each mode of operation

As an example, in the first mode of operation, the control unit **302** determines the buffer state by evaluating the expression (S-C) mod b. The first criteria that the determined buffer state is evaluated against is buffer state < W. In the second mode, the control unit **302** determines the buffer state by evaluating the expression (C-S) mod b. The second criteria that the determined buffer state is evaluated against is buffer state > W. Where:
C is the value of the C pointer **306;**
S is the value of the S pointer **308;**
b is the size of the FIFO memory buffer **304;** and
W is the value to the watermark of FIFO memory buffer **304.**

In the first mode of operation, the size of the segment of data that is read and replaced, starting at the memory location indicated by the value S pointer +1, is predetermined as (b - W). In the second mode of operation, the size of the segment of data that is read and replaced, starting at the memory location indicated by the value of S pointer +1, is predetermined as W. As described above, the predetermined sizes of the segments may be determined by the application processor **102,** or may be communicated to the application processor by the audio buffer **104** when an additional segment of data is requested by the audio buffer.

As the audio buffer **104** adds additional output audio data from the application processor **102,** the value of the S pointer **308** is updated to reflect the last position filled in the FIFO memory buffer **304.** That is the size of segment data read and replaced is added to the value of the S pointer **308.**

Similarly, as the audio buffer reads blocks of output audio data and replaces it them with blocks of input control data, the value of the C pointer **306** is incremented accordingly. Furthermore, the new values of the pointers may be modified in order that the pointers return to the beginning of the FIFO buffer memory. For example the new value of the C pointer **306** may be determined by C = (C + 1) mod b.

It will be appreciated that the terms continuous and discontinuous are used relative to the cycle of the audio buffer. For example, a single cycle of the audio buffer may read/replace multiple blocks of data from the FIFO memory buffer **304.** Thus the continuous interface reads/replaces data from/to the audio buffer **104** during each cycle, while the discontinuous interface reads/replaces data from/to the audio buffer **104** only during certain cycles.

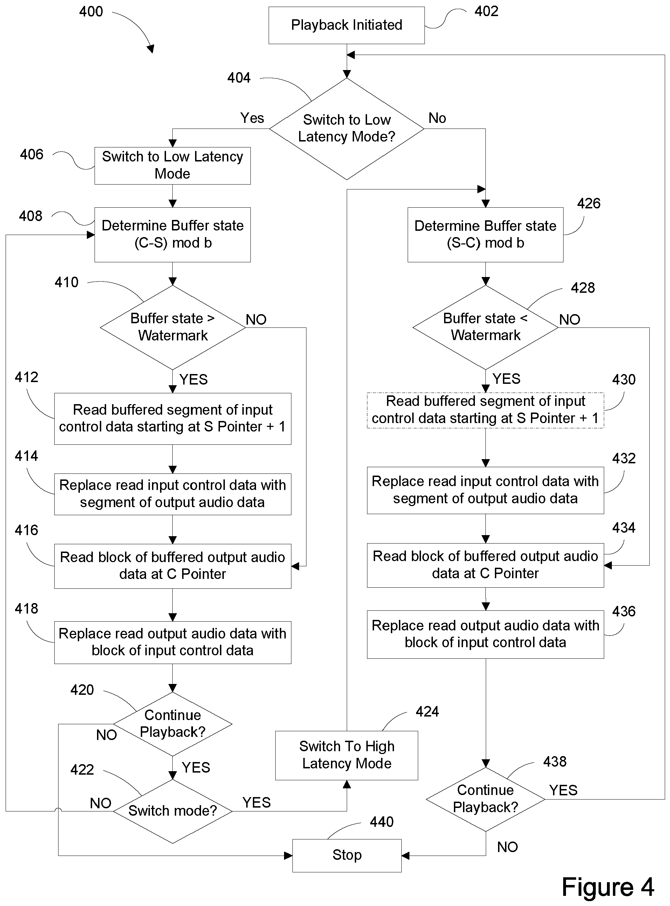

Figure 4 depicts in a flowchart, an illustrative method **400** of operating an audio buffer, for example audio buffer **104** in an audio playback device **100.** The method **400** begins when audio playback is initiated **(402).** It is assumed for the sake of simplicity of the description that playback is initiated into the high latency mode. During audio playback, the application processor **102** will provide segments of output audio data to the audio buffer **104** when signalled by the audio buffer **104.** The size of the segments is determined based on the operating mode of the audio buffer **104.** Once playback is initiated **(402),** the method **400** determines whether to switch to the low latency mode **(404).** If it is determined to switch to the low latency mode (Yes at **404),** for example upon receiving at the application processor **102** an indication via the ADDAC control signal line **114** that playback control information has been detected on the mic line, the method switches to the low latency mode **(406).** This switch to the low latency mode may include switching the application processor **102** to a low latency mode in which the size of the segments of data read and replaced from and to the audio buffer is smaller, for example W, as well as switching the audio buffer **104** to the low latency mode of operation, which results in signalling for data from the application processor **102** more frequently. Once the method **400** has switched to the low latency mode, the buffer state is determined according to the equation (C-S) mod b **(408).** It is then determined if the buffer state is greater than W **(410).** If the buffer state is greater than W (Yes at **410),** a segment of buffered input control data is read from the buffer starting at the location indicated by S pointer +1 **(412).** The size of the segment is predetermined and may be for example W. The segment of input control data just read is then replaced with a segment of output audio data received from the application processor **102(414)** of a corresponding segment size.

Although not depicted in Figure 4, it will be appreciated that the value of the S pointer **308** may be updated to reflect the new position of the last data block in the buffer. A block of buffered output audio data is read from the audio buffer **104** from the memory position indicated by the C pointer **306 (416).** The read block of output audio data is then replaced with a block of input control data from the ADDAC **106(418).** Although not depicted in Figure 4, the value of the C **306** pointer is updated, after replacing the read block of output audio data with the block of input control data, for example with the value of C pointer +1. After replacing the read output control data it is determined if playback should continue **(420).** If it is determined that playback should not continue (No at **420)** than playback is stopped **(440).** If playback is to continue (Yes at **420),** it is determined if operating modes should be switched **(422).** The determination as to whether or not to switch modes **(422)** may be made based on time, for example the audio buffer **104** remains in the low latency mode for 1 second, or on other conditions such as the length of time to execute an playback control received as the input control data. The application processor **102** may determine when to switch modes, for example based on a signal received from the ADDAC **106,** and signal the same to the audio buffer **104.** Regardless of how it is determined, if it is determined not to switch modes (No at **422),** the buffer state is determined again using the equation (C-S)mod **b(408).** Again it is determined if the buffer state is greater than W **(410).** If it is not greater than W (No at **410)** the method does not read input control data and replace it with output audio data received from the application processor **102** (Steps **412, 414).** Instead the buffered output audio data is read **(416)** and replaced with input control data received from the ADDAC **106 (418).**

When operating in the high latency mode, whether because it was determined that it was not necessary to switch to the low latency mode (No at **404),** or it was determined to switch to the high latency mode (Yes at **422),** the method determines the buffer state according to the equation (S-C) mod b **(426).** It is determined if the buffer state is less than W **(428).** If it is (Yes at **428),** a buffered segment of input control data may be read out of the buffer memory starting at the memory position indicated by S pointer +1 **(430).** Reading out the input control data may be optional in the high latency mode, as it is assumed that while operating in the high latency mode there is no control information transmitted by the playback control device **112** present in the input control date. However the input control data may be read out and discarded by, for example, the application processor **102,** or may be read and utilized, for example for diagnostics or statistics. Regardless of a segment of input control data being read from the buffer, it is replaced with a segment of output control data received from the application processor **(432).** The size of the segment of data that is optionally read and replaced may be determined by (b-W). The method reads the block of buffered output audio data located at the position indicated by C pointer **306 (434)** and then replaces the read output audio data with a block of input control data received from the ADDAC **106 (406).** The method then determines if playback should continue **(438),** and if it shouldn't (No at **438)** playback is stopped **(440).** If it is determined that playback should continue (Yes at **438)** the method returns to determine if it should switch to the low latency mode **(404).**

If in the high latency mode, it is determined that the buffer state is not less than W (No at 428), no segment of output audio data is added to the audio buffer **104,** rather output audio data is only read out of the audio buffer **104** at the location indicated by C pointer **306 (434)** and replaced with input control data received from the ADDAC **106 (436).**

It will be appreciated that the values of the S and C pointers are updated accordingly while operating in the high latency mode, as was described above for the low latency mode. For example, the S pointer is updated with the value of S pointer +(b-W) each time a segment of input control data is replaced with output audio data received from the application processor **102 (432).** Similarly the value of the C pointer is incremented each time a block of output audio data is replaced with input control data received from the ADDAC **106.**

Figure 5 depicts in a memory diagram, an illustrative memory buffer during the operation of an illustrative audio buffer in a first mode of operation. Figure 5 depicts the memory contents of a memory buffer **502** operated in accordance with the high latency mode described above. Figure 5 depicts the memory contents **502** through numerous buffer cycles **504.** As is apparent in Figure 5, the buffer frequency, that is the frequency at which the buffer cycles occur **504,** may be much lower than the memory frequency, that is the frequency at which memory blocks can be written to the FIFO buffer memory. As such, in each buffer cycle, multiple blocks of data can be read and replaced, even though the FIFO buffer memory can only perform one operation at a time, each individual block in the FIFO buffer memory can only do one operation per memory cycle. Thus, a number of memory cycles occur within each buffer cycle. For example the cycle frequency of the audio buffer may be 48 kHz, while the memory frequency of the buffer memory may be in the range of 2 - 20 MHz. It will be appreciated that these illustrative values are provided merely for the sake of clarity and the exact timing between the FIFO buffer memory frequency, the buffer cycle frequency and other timing concerns may vary depending on the particular timing requirements of the memory and other components coupled to the audio buffer **104.** The timing may be provided by an internal oscillator of the audio buffer, or an external timing signal, which may be divided or multiplied to achieve the frequencies required by the FIFO buffer memory and the buffer cycle frequency.

In Figure 5 the memory contents of the FIFO buffer memory **502** are depicted from memory location 1 to 12 through numerous buffer cycles **504** 0 - 17. The buffer state is indicated **506** as determined for each cycle according to the equation for the high latency mode, namely (S-C) mod b. Also depicted are the positions of the C pointer and S pointers. The length of the buffer b in this example is 12 and W is assumed to be 3. W may be chosen as a percentage of the size of the buffer, for example 1 - 30%. The contents of each block of memory may either by empty **508,** filled with output audio data **510** or filled with input control data **512.** Furthermore, the state of the block is depicted by either by a diagonal pattern **514** if the memory block is being written to in the current buffer cycle or a hatch pattern **516** if the memory block is being read from in the current buffer cycle. As described above, more than one memory operation can occur within a single buffer cycle, and as such multiple memory blocks can be read and/or written in a single buffer cycle.

The initial state of the buffer (Cycle 0) has memory blocks 1 - 9 filled with output audio data **510,** and memory blocks 10 - 12 empty **508.** The first cycle begins with the C pointer **518** at position 1. The buffer state is determined to be 8, according to (S-C) mod b, which is greater than W, so no segment of output audio data will be added in the buffer cycle. A block of output audio data **510,** at the position indicated by the C pointer, is first read out to the ADDAC **106** and then replaced with input control data **512** that is continuously received from the ADDAC **106.** Cycle 1 has been broken up into two sub steps 1a and 1b to highlight the reading of the output audio data and subsequent replacing of the read data with the input control data. After the block data is replaced, the value of the C pointer is updated, for example from 1 to 2 as reflected in the next cycle, and the process continues. Subsequent cycles of reading output audio data and replacing it with input control data are depicted in cycles 2 to 6. These cycles only show the data being replaced at the C pointer position for simplicity.

At cycle 7 the buffer state is determined to be 2 according to (S-C) mod b, which is less than W, and so a segment of output audio data will be added to the buffer in this buffer cycle. A segment of the input control data is read from the buffer and then replaced with the segment of output audio data. The size of the segment of data is determined by (b-W), in this example 9. The 9 block segment of input control data is read and replaced starting at the position indicated by S pointer +1. After reading the input control data and replacing it with the 9 block segment of output audio data, the S pointer is updated to reflect the new last fill position, namely 6 which is S pointer + (b-W) mod b, as reflected by the position of the S pointer at the beginning of the next cycle. Once the 9 block segment of output audio data is placed in the audio buffer, one block of output audio data is read from the buffer, the ADDAC **106,** and replaced with one block of input control data at the location indicated by the C pointer, which is subsequently updated.

The reading of the output audio data, from the location indicated by the C pointer, and replacement with the input control data continues as described above through cycles 8 - 15, and since the buffer state is determined to be greater than W in each buffer cycle no segments of output audio data are added to the audio buffer. At cycle 16, the buffer state is determined to be 2, which is less than W, and so another 9 block segment of audio data is provided to the audio buffer after reading the 9 block segment of input control data from the location beginning at the location indicated by the S pointer. After replacing the segment of input control data with the new segment of output audio data, a block of output audio data is read from the audio buffer and replaced with a block of input control data at the location indicated by the C pointer.

As is apparent from Figure 5, the application processor **102** reads, or receives, a segment of input control data, which may contain control information from the playback control device **112,** each time the audio buffer receives a new segment of output audio data. In the high latency mode, the audio buffer signals to the application processor to provide large segments of data only when the FIFO buffer memory **304** is nearly empty. It will be appreciated that the FIFO buffer memory may be considered as empty if the C pointer is equal to the S pointer, or within a particular threshold of each other. The size of the segments may be determined by the size of the memory buffer minus the Watermark of the FIFO buffer memory (b-W). W may be chosen as a percentage of the size of the FIFO buffer memory, for example 10%. In the high latency mode the audio buffer receives large segments of output audio data intermittently, at a low rate, from the application processor, continuously provides blocks of the output audio data to the ADDAC **106,** and signals to the application processor **102** to provide another segment of output audio data once the buffer is nearly empty. While the high latency mode allows the application processor **102** to be in the low power sleep mode for long periods of time as the output audio data of the added segment is slowly read out by, or provided to, the ADDAC **106,** it also means that the application processor **102** will need to wait a long period of time before receiving the input control data.

In order to lower the latency between receiving input control data at the ADDAC **106** and providing it to the application processor **102,** a low latency mode of operation is provided by the audio buffer **104.** The operating mode of the audio buffer **104** may be controlled by the application processor **102.** When the ADDAC **106** detects control information, such as a tone or combination of tones, on the mic line coupled to the ADDAC **106,** the ADDAC **106** provides a signal to the application processor **203** that causes the application processor **102** to operate in a low latency mode, which reads a replaces smaller segments of data when signalled by the audio buffer **104.** The application processor may provide a signal to the audio buffer **104** to signal to it to switch to the low latency mode.

Figure 6 depicts in a memory diagram, an illustrative memory buffer during the operation of an illustrative audio buffer in a second mode of operation in accordance. Figure 6 is similar to Figure 5; however, at the end of cycle 2 the audio buffer is switched to the low latency mode of operation. It should be noted that in cycles 1 and 2 of Figure 6, the audio buffer is operating in the high latency mode, the buffer state is determined according to (S-C) mod b, and the audio buffer signals the application processor for additional audio data when the buffer state is less than the Watermark. At cycle 3, the audio buffer is operating in the low latency mode and the buffer state is determined to be 6 according to (C-S) mod b, which is greater than W and so a segment of input control data is read from the audio buffer **104** and replaced with a segment of output audio data received from the application processor **102.** The segment size of the data that is read and replaced during the low latency mode may be determined by W, which in this example is 3. As shown at cycle 3, a small segment of input control data is read and replaced with a small segment of output audio data from the location indicated by the S pointer +1. A block of output audio data is also read from the audio buffer, by the ADDAC **106,** and replaced with a block of input control data received from the ADDAC **106.**

As depicted in Figure 6, a segment of input control data is read by the application processor **102** at cycles 3, 4 and 7. As is apparent from Figure 5 and Figure 6, the application processor **102** receives the input control data quicker in the low latency mode than in the high latency mode. As a result of the two modes, the audio buffer 104 may be used to provide an efficient low latency audio buffer for use in an audio playback device **100.** The efficiency is provided by the high latency mode in which the application processor **102** may conserve power by sleeping in between periodically waking up to provide large segments of output audio data to the audio buffer **104,** when signalled to do so by the audio buffer **104.** The low latency is provided by the low latency mode, which may be switched to when the ADDAC **106** detects control information on the mic line. The low latency mode causes the audio buffer **104** to signal to the application processor to provide smaller segments of data more frequently. The application processor **102** also reads small segments of input control data from the audio buffer each time it is signalled to provide addition output audio data.

Figures 5 and 6 describe an illustrative embodiment of an audio buffer **104** using a FIFO memory buffer **304.** The memory buffer size is described as (b). It is understood that the memory buffer could be implemented within physical memory of a size (B) greater than, or at least equal to, b. The amount of physical memory used by the memory buffer may vary and may be configurable. For example the memory buffer may use all of the available physical memory (b=B), or may use a smaller portion of the available physical memory (b<B). In addition to the size of the memory buffer (b) being configurable, the value of the watermark (W) may also be configurable. The largest possible value for W is one less than memory buffer size (b); however the value of W may be chosen to be a smaller percentage of the memory buffer size (b). The value of W may range from 0 to b -1. For example the memory buffer size (b) in Figures 5 and 6 is 12, while the value of W is set to 3. Furthermore, the particular timing and ordering of the memory operations, for example reading and replacing data, described above may vary depending on the type of memory used to implement the buffer. For example, the number of operations possible per memory cycle may change if the memory buffer is implemented using unified memory as opposed to dual ported memory.

Various embodiments of an audio buffer **104** have been described above as providing a bidirectional buffer between an application processor **102** and an ADDAC **106.** The application processor **102** provides output audio data to the audio buffer and receives input control data from the audio buffer. Similarly the ADDAC **106** receives output audio data from the audio buffer and provides input control data to the audio buffer.

The above description has referred to output audio data being transferred from the application processor to the ADDAC for output by an audio output device, and input control data being transferred from a playback control device to the ADDAC and then to the application processor. These descriptions have been used above for the clarity of the description. The data that is output from the application processor to the ADDAC does not need to be audio data, it could be for example output control data, or more generally any output data. Similarly, the input control data could be for example input audio data, or more generally any input data.

It will be apparent that the audio buffer may be used in applications other than an audio playback device. The audio buffer, or more generally an efficient low latency buffer, may provide a bidirectional buffer between two interfaces. The first interface, which may be referred to as the discontinuous interface and was described above as the application processor **102,** can provide different predetermined sized segments of data intermittently when signalled by the audio buffer. The discontinuous interface may be able to quickly read and replace the data from and to the audio buffer. The second interface, which may be referred to as the continuous interface and was described above as the ADDAC **106,** can continuously read and replace a block of data with another block of data.

The audio buffer **104** may be implemented as a separate buffer chip that is connected to both the ADDAC and the application processor. Alternatively the audio buffer **104** may be implemented within either the application processor 102 or the ADDAC **106.** Furthermore, it will be apparent to one skilled in the art that the audio buffer **104** may read and replace data in various ways. Generally the process described above was to determine the buffer state, read and replace with a segment of output audio data and then read and replace with a block of input control data. Certain steps described could be reordered, or carried out in parallel. For example, the buffer state may be determined at the end of a cycle. The segment of output audio data may be added to the buffer after reading a block of output audio data and replacing it with a block of input control data.

Further still, the particulars for implementing the actual reading and replacing of the data may vary. For example, the application processor **102** has been described above as determining the size of the segment of data that is to be read and replaced. The audio buffer may indicate to the application processor the size of the segment to be read and replaced. Further still, the above has described the audio buffer as being responsible for the reading and replacing of data in the FIFO buffer memory. Alternatively, the audio buffer may provide the relevant pointers to the application processor **102** in order to allow the application processor **102** to read and replace the data directly with the FIFO buffer memory.

The efficient low latency buffer may comprise a single hardware component that can be incorporated into portable devices that provide portable audio playback. The single hardware component may combine hardware, firmware and software in order to implement the efficient low latency buffer described herein. Alternatively, the efficient low latency buffer may be implemented by the hardware components of the portable device and may include software expressed as a series of computer executable instructions that configure the hardware of the portable device to implement the efficient low latency buffer described herein. In other words, these method steps can be implemented as coded instructions in a computer program product or machine-readable medium which, when loaded into memory and executed on the microprocessor of a portable device, perform the steps of the various methods described herein.

This efficient low latency buffer has been described in terms of specific implementations and configurations which are intended to be illustrative only. The scope of the exclusive right sought by the Applicant is therefore intended to be limited solely by the appended claims.

## Claims

1. A bi-directional buffer (104) comprising:
a memory buffer (304) for storing blocks of output data and input data, where the output data originates at a first interface and is to be read by a second interface and the input data originates at the second interface and is to be read by the first interface;
a first data path connection (310) for intermittently reading segments of several blocks of input data from the memory buffer (304) to the first interface and replacing the read segments by segments of several blocks of output data from the first interface;
a second data path connection (312) for continuously reading blocks of output data from the memory buffer (304) to the second interface and continuously replacing the read blocks of data by blocks of input data from the second interface; and
a control unit (302) using a first pointer (308) indicating a fill position (S) of the last written output data in the memory buffer (304) and a second pointer (306) indicating a current read position (C) of output data in the memory buffer (304), the control unit (302) having:
a first mode of operation in which the control unit (302) is adapted to intermittently signal to the first interface over a control path connection (314) to write a segment of several blocks of data of a first predetermined size over the first data path connection (310) in the memory buffer (304) at a position ahead of the first pointer (308); and
a second mode of operation in which the control unit (302) is adapted to intermittently signal to the first interface over the control path connection (314) to read and replace a segment of several blocks of data of a second predetermined size less than the first predetermined size over the first data path connection (310) at the position in the memory buffer (304) ahead of the first pointer (308), where said signalling in the second mode of operation is performed more frequently than in the first mode of operation;
wherein a block of data stored in the memory buffer at a position indicated by the second pointer is continuously read and replaced by the second interface over the second data path connection in both modes of operation.

2. The bi-directional buffer as claimed in claim 1, wherein the control unit (302) is adapted to switch from the first mode of operation to the second mode of operation when a signal is received using the control path connection (314).

3. The bi-directional buffer as claimed in claim 1 or 2, wherein the control unit (302) is further adapted to:
increment the first pointer (308) by an amount equal to the size of the segment of several blocks of data after replacing the segment of several blocks of data; and
increment the second pointer (306) after replacing the block of data.

4. The bi-directional buffer as claimed in any one of claims 1 to 3, wherein the control unit (302) is further adapted to, when in the first mode, read the segment of several blocks of data stored in the memory buffer (304) at the position ahead of the first pointer (308) to the first interface over the first data connection prior to writing the segment of several blocks of data from the first interface.

5. The bi-directional buffer as claimed in any one of claims 1 to 4, wherein:
the memory buffer (304) is of a predetermined size (b);
the first predetermined size is given by b minus a watermark (W) of the memory buffer (304)
the second predetermined size is W;
in the first mode, the control unit (302) is adapted to signal to the first interface when (S-C) mod b is less than W; and
in the second mode, the control unit (302) is adapted to signal to the first interface when (C-S) mod b is greater than W.

6. An audio playback device (100) comprising:
an input/output connector (108) for coupling the audio playback device (100) to an audio output device (110) and a playback control device (112);
an application processor (102) for:
in a first mode of operation intermittently writing a segment of several blocks of audio output data of a first predetermined size;
in a second mode of operation intermittently replacing a segment of several blocks of audio output data of a second predetermined size, less than the first predetermined size; and
intermittently reading a segment of several blocks of control input data of the second predetermined size; and
an analog-to-digital/digital-to-analog converter (ADDAC) (106) for:
continuously reading a block of audio output data for playback; and
continuously replacing a block of data from the playback control device (112); and
an audio buffer (104) according to claim 1 for storing the blocks of audio output data and control input data, wherein:
the first data path connection (310) comprises an application processor data path coupled to the application processor (102);
the second data path connection (312) comprises an ADDAC data path coupled to the ADDAC (106);
the first interface comprises the application processor;
the second interface comprises the ADDAC; and
the control path connection (314) comprises an application processor control path coupled to the application processor (102).

7. The audio playback device as claimed in claim 6, wherein the application processor (102) is adapted to signal to the audio buffer (104), using the application processor control path, to switch from the first mode to the second mode.

8. The audio playback device as claimed in claim 6 or 7, wherein the playback control device (112) is adapted to transmit control information to the audio playback device (100) over an input line of the I/O connection (108) and the ADDAC (106) is adapted to convert the control information into a plurality of blocks of data.

9. The audio playback device as claimed in claim 8, wherein the ADDAC (106) is coupled to the application processor (102) by an ADDAC control signal line (114), and is adapted to signal to the application processor (112) that control information is detected on the input line.

10. The audio playback device as claimed in claim 9, wherein the application processor (102) is adapted to signal to the audio buffer (104) to switch to the second mode of operation when the application processor (104) is signalled by the ADDAC (106) that there is control information.

11. The audio playback device as claimed in any one of claims 6 to 10, wherein, the memory buffer (304) is of a predetermined size (b);
the first predetermined size is given by b minus a watermark (W) of the
memory buffer (304);
the second predetermined size is W;
the first pointer (308) indicates a fill position (S) of the memory buffer (304); the second pointer (306) indicates a current read position (C) of the memory
buffer (304);
in the first mode, the control unit (302) is adapted to signal to the application
processor when (S-C) mod b is less than W; and
in the second mode, the control unit (302) is adapted to signal to the
application processor when (C-S) mod b is greater than W.

12. The audio playback device as claimed in any one of claims 6 to 11, wherein the audio buffer (104) is implemented in one of:
the application processor (102);
the ADDAC (106); or
a separate audio buffer chip of the audio playback device (100).

13. A method of operating a bi-directional buffer (104) for storing output data received from a first interface capable of providing segments of several blocks of data intermittently and input data received from a second interface capable of continuously providing blocks of data, the method comprising:
operating the buffer (104) in a first mode comprising:
determining a state of the buffer (buffer state);
determining from the buffer state if more output data is to be added to the buffer (104) from the first interface coupled to the buffer (104) based upon a first set of criteria;
replacing input data stored in the buffer (104) with output data of a first predetermined size received from the first interface, starting at a first position indicated by a first pointer (306) based upon the determined buffer state;
reading output data from the buffer (104) at a second position indicated by a second pointer (308); and
replacing the read output data with input data received from the second interface; and
switching the buffer (104) to operate in a second mode comprising:
determining the buffer state;
determining from the buffer state if more output data is to be added to the buffer (104) from the first interface based upon a second set of criteria;
reading an amount of input data of a second predetermined size from the buffer (104) starting at the first position indicated by the first pointer (306);
replacing the read input data stored in the buffer (104) with an amount of output data of the second predetermined size received from the first interface, starting at the first position indicated by the first pointer (306) based upon the determined buffer state;
reading output data from the buffer (104) at the second position indicated by the second pointer (308); and
replacing the read output data with input data received from the second interface.

14. The method of claim 13, wherein
a memory buffer (304) of the buffer (104) is of a predetermined size (b); the first predetermined size is given by b minus a watermark (W) of the
memory buffer (304)
the second predetermined size is W;
the first pointer (306) indicates a current read position (C) of the memory
buffer (304);
the second pointer (308) indicates a location ahead of a fill position (S) of the
memory buffer (304);
in the first mode, the buffer state is determined by (S-C) mod b;
in the second mode, the buffer state is determined by (C-S) mod b;
in the first mode, the first criteria for determining if more data is to be added
comprises determining if the determined buffer state < W; and
in the second mode, the second criteria for determining if more data is to be
added comprises determining if the determined buffer state > W.

15. The method claim of claim 14, wherein the buffer (104) is used in an audio playback device (100) comprising an application processor (102) and an analog-to-digital/digital-to-analog converter (ADDAC) (106), the method further comprising:
detecting at the ADDAC (106) playback control information;
signalling to the application processor (102) the presence of playback control information; and
signalling to the audio buffer (102) to switch to the second mode of operation.

## Patentansprüche

1. Bidirektionaler Puffer (104) mit:
einem Speicherpuffer (304) zum Speichern von Blöcken von Ausgabedaten und Eingabedaten, wobei die Ausgabedaten an einer ersten Schnittstelle entstehen und von einer zweiten Schnittstelle gelesen werden sollen, und die Eingabedaten an der zweiten Schnittstelle entstehen und von der ersten Schnittstelle gelesen werden sollen,
einer ersten Datenpfadverbindung (310) zum unterbrochenen Lesen von Segmenten von mehreren Blöcken von Eingabedaten von dem Speicherpuffer (304) zu der ersten Schnittstelle und Ersetzen der gelesenen Segmente mit Segmenten von mehreren Blöcken von Ausgabedaten von der ersten Schnittstelle,
einer zweiten Datenpfadverbindung (312) zum kontinuierlichen Lesen von Blöcken von Ausgabedaten von dem Speicherpuffer (304) zu der zweiten Schnittstelle und kontinuierlichen Ersetzen der gelesenen Blöcke von Daten mit Blöcken von Eingabedaten von der zweiten Schnittstelle und
einer Steuereinheit (302), die einen ersten Zeiger (308), der eine Füllposition (S) der letzten geschriebenen Ausgabedaten in dem Speicherpuffer (304) anzeigt, und einen zweiten Zeiger (306) verwendet, der eine aktuelle Leseposition (C) der Ausgabedaten in dem Speicherpuffer (304) anzeigt, wobei die Steuereinheit (302) Folgendes hat:
einen ersten Betriebsmodus, in dem die Steuereinheit (302) dazu ausgelegt ist, der ersten Schnittstelle über eine Steuerpfadverbindung (314) unterbrochen zu signalisieren, ein Segment von mehreren Blöcken von Daten einer ersten vorbestimmten Größe über die erste Datenpfadverbindung (310) in den Speicherpuffer (304) an einer Position vor dem ersten Zeiger (308) zu schreiben, und
einen zweiten Betriebsmodus, in dem die Steuereinheit (302) dazu ausgelegt ist, der ersten Schnittstelle über die Steuerpfadverbindung (314) unterbrochen zu signalisieren, ein Segment von mehreren Blöcken von Daten einer zweiten vorbestimmten Größe, die geringer als die erste vorbestimmte Größe ist, über die erste Datenpfadverbindung (310) an der Position in dem Speicherpuffer (304) vor dem ersten Zeiger (308) zu lesen und zu ersetzen, wobei das Signalisieren in dem zweiten Betriebsmodus häufiger als in dem ersten Betriebsmodus durchgeführt wird,
wobei ein Block von Daten, die in dem Speicherpuffer an einer Position gespeichert sind, die von dem zweiten Zeiger angezeigt wird, von der zweiten Schnittstelle über die zweite Datenpfadverbindung in beiden Betriebsmodi kontinuierlich gelesen und ersetzt wird.

2. Bidirektionaler Puffer nach Anspruch 1, wobei die Steuereinheit (302) dazu ausgelegt ist, von dem ersten Betriebsmodus in den zweiten Betriebsmodus umzuschalten, wenn ein Signal unter Verwendung der Steuerpfadverbindung (314) empfangen wird.

3. Bidirektionaler Puffer nach Anspruch 1 oder 2, wobei die Steuereinheit (302) ferner dazu ausgelegt ist:
den ersten Zeiger (308) um eine Menge gleich der Größe des Segments von mehreren Blöcken von Daten nach Ersetzen des Segments von mehreren Blöcken von Daten zu inkrementieren, und
den zweiten Zeiger (306) nach Ersetzen des Blocks von Daten zu inkrementieren.

4. Bidirektionaler Puffer nach einem der Ansprüche 1 bis 3, wobei die Steuereinheit (302) ferner dazu ausgelegt ist, wenn sie sich im ersten Modus befindet, das Segment von mehreren Blöcken von Daten über die ersten Datenverbindung zu lesen, die in dem Speicherpuffer (304) an der Position vor dem ersten Zeiger (308) auf die erste Schnittstelle gespeichert sind, vor dem Schreiben des Segments von mehreren Blöcken von Daten von der ersten Schnittstelle.

5. Bidirektionaler Puffer nach einem der Ansprüche 1 bis 4, wobei:
der Speicherpuffer (304) von einer vorbestimmten Größe (b) ist,
die erste vorbestimmte Größe durch b minus einem Wasserzeichen (W) des Speicherpuffers (304) gegeben ist,
die zweite vorbestimmte Größe W ist,
in dem ersten Modus die Steuereinheit (302) dazu ausgelegt ist, der ersten Schnittstelle zu signalisieren, wenn (S-C) mod b weniger als W ist, und
in dem zweiten Modus die Steuereinheit (302) dazu ausgelegt ist, der ersten Schnittstelle zu signalisieren, wenn (C-S) mod b größer als W ist.

6. Audioabspielvorrichtung (100) mit:
einem Eingabe-/Ausgabe-Verbindungsstück (108) zum Koppeln der Audioabspielvorrichtung (100) an eine Audioausgabevorrichtung (110) und eine Abspielsteuerungsvorrichtung (112),
einem Anwendungsprozessor (102) zum:
unterbrochenen Schreiben eines Segments von mehreren Blöcken von Audioausgabedaten einer ersten vorbestimmten Größe in einem ersten Betriebsmodus,
unterbrochenen Ersetzen eines Segments von mehreren Blöcken von Audioausgabedaten von einer zweiten vorbestimmten Größe, die geringer als die erste vorbestimmte Größe ist, in einem zweiten Betriebsmodus und
unterbrochenen Lesen eines Segments von mehreren Blöcken von Steuereingabedaten der zweiten vorbestimmten Größe und
einem Analog-Digital-/Digital-Analog-Umsetzer (ADDAC) (106) zum:
kontinuierlichen Lesen eines Blocks von Audioaugabedaten zum Abspielen und
kontinuierlichen Ersetzen eines Blocks von Daten von der Abspielsteuerungsvorrichtung (112) und
einem Audiopuffer (104) nach Anspruch 1 zum Speichern der Blöcke von Audioausgabedaten und Steuereingabedaten, wobei:
die erste Datenpfadverbindung (310) einen Anwendungsprozessordatenpfad aufweist, der an den ersten Anwendungsprozessor (102) gekoppelt ist,
die zweite Datenpfadverbindung (312) einen ADDAC-Daten-Pfad aufweist, der an das ADDAC (106) gekoppelt ist,
die erste Schnittstelle den Anwendungsprozessor aufweist,
die zweite Schnittstelle den ADDAC aufweist, und
die Steuerpfadverbindung (314) einen Anwendungsprozessorsteuerpfad aufweist, der an den Anwendungsprozessor (102) gekoppelt ist.

7. Audioabspielvorrichtung nach Anspruch 6, wobei der Anwendungsprozessor (102) dazu ausgelegt ist, dem Audiopuffer (104) unter Verwendung des Anwendungsprozessorsteuerpfads zu signalisieren, von dem ersten Betriebsmodus in den zweiten Betriebsmodus umzuschalten.

8. Audioabspielvorrichtung nach Anspruch 6 oder 7, wobei die Abspielsteuerungsvorrichtung (112) dazu ausgelegt ist, Steuerinformation an die Audioabspielvorrichtung (100) über eine Eingabeleitung der Eingabe-/Ausgabe-Verbindung (108) zu senden, und der ADDAC (106) dazu ausgelegt ist, die Steuerinformation in eine Vielzahl von Blöcken von Daten zu konvertieren.

9. Audioabspielvorrichtung nach Anspruch 8, wobei der ADDAC (106) durch eine ADDAC-Steuersignalleitung (114) an den Anwendungsprozessor (102) ist, und dazu ausgelegt ist, dem Anwendungsprozessor (112) zu signalisieren, dass Steuerungsinformation auf der Eingabeleitung erfasst worden ist.

10. Audioabspielvorrichtung nach Anspruch 9, wobei der Anwendungsprozessor (102) dazu ausgelegt ist, dem Audiopuffer (104) zu signalisieren, in den zweiten Betriebsmodus umzuschalten, wenn dem Anwendungsprozessor (104) von dem ADDAC (106) signalisiert wird, dass es Steuerinformation gibt.

11. Audioabspielvorrichtung nach einem der Ansprüche 6 bis 10, wobei der Speicherpuffer (304) von einer vorbestimmten Größe (b) ist,
wobei die erste vorbestimmte Größe durch b minus einem Wasserzeichen (W) des Speicherpuffers (304) gegeben ist,
die zweite vorbestimmte Größe W ist,
der erste Zeiger (308) eine Füllposition (S) des Speicherpuffers (304) anzeigt, und
der zweite Zeiger (306) eine aktuelle Leseposition (C) des Speicherpuffers (304) anzeigt,
in dem ersten Modus die Steuereinheit (302) dazu ausgelegt ist, dem Anwendungsprozessor zu signalisieren, wenn (S-C) mod b weniger als W ist, und
in dem zweiten Modus die Steuereinheit (302) dazu ausgelegt ist, dem Anwendungsprozessor zu signalisieren, wenn (C-S) mod b größer als W ist.

12. Audioabspielvorrichtung nach einem der Ansprüche 6 bis 11, wobei der Audiopuffer (104) in einem aus Folgendem implementiert wird:
einem Anwendungsprozessor (102),
dem ADDAC (106) oder
einem separaten Audiopufferchip der Audioabspielvorrichtung (100).

13. Verfahren zum Betreiben eines bidirektionalen Puffers (104) zum Speichern von Ausgabedaten, die von einer ersten Schnittstelle empfangen sind, die dazu fähig ist, Segmente von mehreren Blöcken von Daten unterbrochen bereitzustellen, und Eingabedaten, die von der zweiten Schnittstelle empfangen sind, die dazu fähig ist, kontinuierlich Blöcke von Daten bereitzustellen, wobei das Verfahren Folgendes aufweist:
Betreiben des Puffers (104) in einem ersten Modus, was Folgendes aufweist:
Bestimmen eines Zustands des Puffers (Pufferzustand),
Bestimmen aus dem Pufferzustand, ob mehr Ausgabedaten zu dem Puffer (104) von der ersten Schnittstelle, die an den Puffer (104) gekoppelt ist, auf der Grundlage einer ersten Menge von Kriterien hinzugefügt werden sollen,
Ersetzen von Eingabedaten, die in dem Puffer (104) gespeichert sind, mit Ausgabedaten von einer ersten vorbestimmten Größe, die von der ersten Schnittstelle empfangen sind, angefangen an einer ersten Position, die von einem ersten Zeiger (306) auf der Grundlage des bestimmten Pufferzustands angezeigt ist,
Lesen der Ausgabedaten von dem Puffer (104) an einer zweiten Position, die von einem zweiten Zeiger (308) angezeigt wird, und
Ersetzen der Leseausgabedaten mit Eingabedaten, die von der zweiten Schnittstelle empfangen sind, und
Umschalten des Puffers (104), um in einem zweiten Betriebsmodus zu funktioniert, mit:
Bestimmen des Pufferzustands,
Bestimmen aus dem Pufferzustand, ob auf der Grundlage des zweiten Menge von Kriterien mehr Ausgabedaten von der ersten Schnittstelle zu dem Puffer (104) hinzugefügt werden sollen,
Lesen einer Menge von Eingabedaten von einer zweiten vorbestimmten Größe von dem Puffer (104), angefangen an der ersten Position, die von dem ersten Zeiger (306) angezeigt wird, auf der Grundlage des bestimmten Pufferzustands,
Ersetzen der gelesenen Eingabedaten, die in dem Puffer (104) gespeichert sind, mit einer Menge von Ausgabedaten von der zweiten vorbestimmten Größe, die von der ersten Schnittstelle empfangen sind, angefangen an der ersten Position, die von dem ersten Zeiger (306) angezeigt wird,
Lesen von Ausgabedaten von dem Puffer (104) an der zweiten Position, die von dem zweiten Zeiger (308) angezeigt wird, und
Ersetzen der gelesenen Ausgabedaten mit Eingabedaten, die von der zweiten Schnittstelle empfangen worden sind.

14. Verfahren nach Anspruch 13, wobei
ein Speicherpuffer (304) des Puffers (104) von einer vorbestimmten Größe (b) ist,
die erste vorbestimmte Größe durch b minus einem Wasserzeichen (W) des Speicherpuffers (304) gegeben ist,
die zweite vorbestimmte Größe W ist,
der erste Zeiger (306) eine aktuelle Leseposition (C) des Speicherpuffers (304) anzeigt,
der zweite Zeiger (308) eine Stelle vor einer Füllposition (S) des Speicherpuffers (304) anzeigt,
in dem ersten Modus der Pufferzustand durch (S-C) mod b bestimmt wird, in dem zweiten Modus der Pufferzustand durch (C-S) mod b bestimmt wird,
in dem ersten Modus die ersten Kriterien zum Bestimmen, ob mehr Daten hinzugefügt werden sollen, ein Bestimmen aufweist, ob der bestimmte Pufferzustand < W ist, und
in dem zweiten Modus die zweiten Kriterien zum Bestimmen, ob mehr Daten hinzugefügt werden sollen, ein Bestimmen aufweist, ob der bestimmte Pufferzustand > W ist.

15. Verfahren nach Anspruch 14, wobei der Puffer (104) in einer Audioabspielvorrichtung (100) verwendet wird, die einen Anwendungsprozessor (102) und einen Analog-Digital-/Digital-Analog-Umsetzer (ADDAC) (106), wobei das Verfahren ferner Folgendes aufweist:
Erfassen von Abspielsteuerungsinformation an dem ADDAC (106),
Signalisieren des Vorhandenseins von Abspielsteuerungsinformation an den Anwendungsprozessor (102) und
Signalisieren dem Audiopuffer (102), in den zweiten Betriebsmodus umzuschalten.

## Revendications

1. Tampon bidirectionnel (104) comprenant :
un tampon de mémoire (304) destiné à stocker des blocs de données de sortie et de données d'entrée, les données de sortie provenant d'une première interface et devant être lues par une seconde interface et les données d'entrée provenant de la seconde interface et devant être lues par la première interface ;
une première connexion de chemin de données (310) destinée à lire de manière intermittente des segments composés de plusieurs blocs de données d'entrée dans le tampon de mémoire (304) à destination de la première interface et à remplacer les segments lus par des segments composés de plusieurs blocs de données de sortie provenant de la première interface ;
une seconde connexion de chemin de données (312) destinée à lire de manière continue des blocs de données de sortie dans le tampon de mémoire (304) à destination de la seconde interface et à remplacer de manière continue les blocs de données lus par des blocs de données d'entrée provenant de la seconde interface ; et
une unité de commande (302) utilisant un premier pointeur (308) indiquant une position de remplissage (S) des dernières données de sortie écrites dans le tampon de mémoire (304) et un second pointeur (306) indiquant une position courante de lecture (C) de données de sortie dans le tampon de mémoire (304), l'unité de commande (302) possédant :
un premier mode de fonctionnement dans lequel l'unité de commande (302) est conçue pour signaler de manière intermittente à la première interface, via une connexion de chemin de commande (314), d'écrire un segment de plusieurs blocs de données d'une première taille prédéterminée, via la première connexion de chemin de données (310), dans le tampon de mémoire (304) à une position précédant le premier pointeur (308) ; et
un second mode de fonctionnement dans lequel l'unité de commande (302) est conçue pour signaler de manière intermittente à la première interface, via la connexion de chemin de commande (314), de lire et remplacer un segment de plusieurs blocs de données d'une seconde taille prédéterminée, inférieure à la première taille prédéterminée, via la première connexion de chemin de données (310), à la position dans le tampon de mémoire (304) qui précède le premier pointeur (308), ladite signalisation dans le second mode de fonctionnement étant exécutée plus fréquemment que dans le premier mode de fonctionnement ;
dans lequel un bloc de données stocké dans le tampon de mémoire à une position indiquée par le second pointeur est lu et remplacé de manière continue par la seconde interface, via la seconde connexion de chemin de données, dans les deux modes de fonctionnement.

2. Tampon bidirectionnel selon la revendication 1, dans lequel l'unité de commande (302) est conçue pour passer du premier mode de fonctionnement dans le second mode de fonctionnement lorsqu'un signal est reçu sur la connexion de chemin de commande (314).

3. Tampon bidirectionnel selon la revendication 1 ou 2, dans lequel l'unité de commande (302) est en outre conçue pour :
incrémenter le premier pointeur (308) d'une valeur égale à la taille du segment de plusieurs blocs de données après le remplacement de plusieurs blocs de données ; et
incrémenter le second pointeur (306) après le remplacement du bloc de données.

4. Tampon bidirectionnel selon l'une quelconque des revendications 1 à 3, dans lequel l'unité de commande (302) est en outre conçue, lorsqu'elle est dans le premier mode, pour lire le segment de plusieurs blocs de données stocké dans le tampon de mémoire (304) à la position précédant le premier pointeur (308) vers la première interface via la première connexion de données avant d'écrire le segment de plusieurs blocs de données provenant de la première interface.

5. Tampon bidirectionnel selon l'une quelconque des revendications 1 à 4, dans lequel :
le tampon de mémoire (304) possède une taille prédéterminée (b) ;
la première taille prédéterminée est donnée par b moins un repère de niveau (W) du tampon de mémoire (304) ;
la seconde taille prédéterminée est W ;
dans le premier mode, l'unité de commande (302) est conçue pour signaler à la première interface que (S - C) mod b est inférieur à W ; et
dans le second mode, l'unité de commande (302) est conçue pour signaler à la première interface que (C - S) mod b est supérieur à W.

6. Dispositif de reproduction audio (100) comprenant :
un connecteur d'entrée/sortie (108) destiné à coupler le dispositif de reproduction audio (100) à un dispositif de sortie audio (110) et à un dispositif de commande de reproduction (112) ;
un processeur d'application (102) destiné à :
dans un premier mode de fonctionnement, écrire de manière intermittente un segment de plusieurs blocs de données de sortie audio d'une première taille prédéterminée ;
dans un second mode de fonctionnement, remplacer de manière intermittente un segment de plusieurs blocs de données de sortie audio d'une seconde taille prédéterminée, inférieure à la première taille prédéterminée ; et
lire de manière intermittente un segment de plusieurs blocs de données d'entrée de commande de la seconde taille prédéterminée ; et
un convertisseur analogique-numérique et numérique-analogique, CAN/NA, (106) destiné à :
lire en continu un bloc de données de sortie audio pour leur reproduction ; et
remplacer de manière continue un bloc de données provenant du dispositif de commande de reproduction (112) ; et
un tampon audio (104) selon la revendication 1 destiné à enregistrer les blocs de données de sortie audio et de données d'entrée de commande, dans lequel :
la première connexion de chemin de données (310) consiste en un trajet de données du processeur d'application, couplé au processeur d'application (102) ;
la seconde connexion de chemin de données (312) consiste en un trajet de CAN/NA couplé au CAN/NA (106) ;
la première interface consiste en le processeur d'application ;
la seconde interface consiste en le CAN/NA ; et
la connexion de chemin de commande (314) consiste en un trajet de commande du processeur d'application, couplé au processeur d'application (102).

7. Dispositif de reproduction audio selon la revendication 6, dans lequel le processeur d'application (102) est conçu pour envoyer au tampon audio (104), via le trajet de commande du processeur d'application, un signal ordonnant le passage du premier mode vers le second mode.

8. Dispositif de reproduction audio selon la revendication 6 ou 7, dans lequel le dispositif de commande de reproduction (112) est conçu pour envoyer des informations de commande au dispositif de reproduction audio (100), via une ligne d'entrée de la connexion E/S (108) et le CAN/NA (106) est conçu pour convertir les informations de commande en une pluralité de blocs de données.

9. Dispositif de reproduction audio selon la revendication 8, dans lequel le CAN/NA (106) est couplé au processeur d'application (102) via une ligne de signal de commande de CAN/NA (114) et est conçu pour signaler au processeur d'application (102) que des informations de commande sont détectées sur la ligne d'entrée.

10. Dispositif de reproduction audio selon la revendication 9, dans lequel le processeur d'application (102) est conçu pour envoyer au tampon audio (104) un signal commandant le passage dans le second mode de fonctionnement lorsque le processeur d'application (102) reçoit du CAN/NA (106) un signal indiquant la présence d'informations de commande.

11. Dispositif de reproduction audio selon l'une quelconque des revendications 6 à 10, dans lequel :
le tampon de mémoire (304) possède une taille prédéterminée (b) ;
la première taille prédéterminée est donnée par b moins un repère de niveau (W) du tampon de mémoire (304) ;
la seconde taille prédéterminée est W ;
le premier pointeur (308) indique une position de remplissage (S) du tampon de mémoire (304) ;
le second pointeur (306) indique une position courante de lecture (C) dans le tampon de mémoire (304) ;
dans le premier mode, l'unité de commande (302) est conçue pour signaler à la première interface que (S - C) mod b est inférieur à W ; et
dans le second mode, l'unité de commande (302) est conçue pour signaler à la première interface que (C - S) mod b est supérieur à W.

12. Dispositif de reproduction audio selon l'une quelconque des revendications 6 à 11, dans lequel le tampon audio (104) est mis en oeuvre dans l'un des éléments suivantes :
le processeur d'application (102) ;
le CAN/NA (106) ; ou
une puce distincte de tampon audio du dispositif de reproduction audio (100).

13. Procédé de fonctionnement d'un tampon bidirectionnel (104) afin de stocker des données de sortie reçues d'une première interface capable de fournir des segments de plusieurs blocs de données de manière intermittente et des données d'entrée reçues d'une seconde interface capable de fournir en continu des blocs de données, le procédé comprenant les étapes consistant à :
faire fonctionner le tampon (104) dans un premier mode comprenant les étapes consistant à :
déterminer un état du tampon (état du tampon) ;
déterminer en fonction de l'état du tampon si d'autres données de sortie doivent être ajoutées au tampon (104) à partir de la première interface couplée au tampon (104), en fonction d'un premier ensemble de critères ;
remplacer des données d'entrée stockées dans le tampon (104) par des données de sortie d'une première taille prédéterminée, reçues de la première interface, en commençant à une première position indiquée par un premier pointeur (306), en fonction de l'état déterminé du tampon ;
lire des données de sortie dans le tampon (104) à une seconde position indiquée par un second pointeur (308) ; et
remplacer les données de sortie ainsi lues par des données d'entrée reçues de la seconde interface ;
et
commuter le tampon (104) pour qu'il fonctionne dans un second mode, comprenant les étapes consistant à :
déterminer l'état du tampon ;
déterminer en fonction de l'état du tampon si d'autres données de sortie doivent être ajoutées au tampon (104) à partir de la première interface, en fonction d'un second ensemble de critères ;
lire une certaine quantité de données d'entrée, d'une seconde taille prédéterminée, dans le tampon (104) à partir de la première position indiquée par le premier pointeur (306) ;
remplacer les données d'entrée lues dans le tampon (104) par une certaine quantité de données de sortie d'une seconde taille prédéterminée, reçues de la première interface, en commençant à la première position indiquée par le premier pointeur (306), en fonction de l'état déterminé du tampon ;
lire des données de sortie dans le tampon (104) à la seconde position indiquée par le second pointeur (308) ; et
remplacer les données de sortie ainsi lues par des données d'entrée reçues de la seconde interface.

14. Procédé selon la revendication 13, dans lequel :
un tampon de mémoire (304) du tampon (104) possède une taille prédéterminée (b) ;
la première taille prédéterminée est donnée par b moins un repère de niveau (W) du tampon de mémoire (304) ;
la seconde taille prédéterminée est W ;
le premier pointeur (306) indique une position de courante de lecture (C) dans le tampon de mémoire (304) ;
le second pointeur (308) indique une position partant d'une position de remplissage (S) du tampon de mémoire (304) ;
dans le premier mode, l'état du tampon est déterminée par (S - C) mod b ;
dans le second mode, l'état du tampon est déterminé par (C - S) mod b ;
dans le premier mode, le premier critère de détermination du fait que de nouvelles données doivent être ajoutées consiste à déterminer si l'état déterminé du tampon est inférieur à W ; et
dans le second mode, le second critère de détermination du fait que de nouvelles données doivent être ajoutées consiste à déterminer si l'état déterminé du tampon est supérieur à W.

15. Procédé selon la revendication 14, dans lequel le tampon (104) est utilisé dans un dispositif de reproduction audio (100) comprenant un processeur d'application (102) et un convertisseur analogique-numérique et numérique-analogique, CAN/NA, (106), la méthode comprenant en outre les étapes consistant à :
détecter sur le CAN/NA (106) des informations de commande de la reproduction ;
signaler au processeur d'application (102) la présence des informations de commande de la reproduction ; et
envoyer au tampon audio (102) un signal ordonnant de passer dans le second mode de fonctionnement.
